# EUROPEAN PATENT APPLICATION

(11) **EP 1 679 875 A2**
(43) Date of publication of application: **12.07.2006**
(21) Application number: 06250006.1
(22) Date of filing: 03.01.2006
(51) Int. Cl.: H04M 19/04

(54) **Data distribution system**

(30) Priority: 05.01.2005 JP 2005000876
(71) Applicant: Xing Inc., Nagoya-shi, Aichi-ken (JP)
(72) Inventor: Shimano, Toshiya c/o Xing Inc., 3rd Floor, Tokyo (JP); Suzuki,Yoshihiro c/o Xing Inc., 3rd Floor, Tokyo (JP); Imai, Kazuyoshi c/o Xing Inc., 3rd Floor, Tokyo (JP)
(74) Representative: Smith, Samuel Leonard

(57) **Abstract**

A data distribution systems (S) for distributing music data set up as an annunciation sound for announcing a predetermined event in a communication terminal device (MP-1,MP-2,...MP-n) comprising
a server device (TS) having a storage device which stores a data file including a plurality of the music data and selection data, and a distribution device which distributing the data file in response to a request message, and
a communication terminal device (MP-1,MP-2,...MP-n) having a communication unit (21) sending the request message and receiving the data file, a record unit (27) which records the data file, a setup unit, and an annunciation unit which outputs the annunciation sound based on the music data thus set up when the predetermined event occurs

## Description

### BACKGROUND OF THE INVENTION

### 1. Field of the Invention

The present invention relates to a technical field of a system for distributing music data to a communication terminal device.

### 2. Related Art

In recent years, function of portable phones and simplified portable phones (hereinafter the both are collectively referred to as portable phones) becomes highly sophisticated. Various types of portable phones having a function of changing their ring tones for notifying arrival of call or e-mail and their annunciation sounds of alarm in accordance with users' tastes are provided. Further, various systems for downloading music data to be set as an annunciation sound such as a ring tone (hereinafter referred to as incoming call signaling melody) into these portable phones are also proposed, for example as in Japanese Unexamined Patent Publication No. H10-173737, which is hereby incorporated by reference.

There is a sales mode that music data corresponding to a plurality of musical compositions are included in a media such as a compact disc (CD) as a packaged commodity (hereinafter referred to as album) . In this situation, there may be a demand that a user wishes to download music data corresponding to a plurality of musical compositions and included in an album, into a portable phone, and changes the incoming call signaling melody to his taste. However, it is only possible to download one musical composition at one time. Therefore, when if the all musical compositions corresponding to one album are to be downloaded, the user is impelled to do an extremely cumbersome work. In other words, it is necessary to repeat to download single musical compositions by a number of times as many as musical compositions to be downloaded.

### SUMMARY OF THE INVENTION

The present invention is provided with regard to the above described circumstance.

It is an object of an illustrative, non-limiting embodiment to provide a data distribution system, a server device, a communication terminal device, and an information recording medium, which enable download of music data corresponding to a plurality of musical compositions for incoming call signaling melody, which are favored by a user, without requiring the user to do cumbersome works.

According to a first of illustrative, non-limiting aspect of the present invention, there is provided a data distribution system for distributing music data, which correspond to a musical composition set up as an annunciation sound for announcing an occurrence of a predetermined event to a user in a communication terminal device, from a server device to the communication terminal device, wherein, the server device including:
a storage device which stores a data file in which a plurality of the music data and selection data for selecting each of the music data in the communication terminal devices are included; and
a distribution device which distributes the data file in response to a request message sent from the communication terminal device, and
the communication terminal device comprising:
a communication device which sends the request message and receives the data file thus distributed; and
a record device which records the data file;
a setup device which extracts the music data selected by the user based on the selection data out of the data file and set up the musical composition corresponding to the music data as the annunciation sound; and
an annunciation device which sounds the annunciation sound based on the music data corresponding to the musical composition thus set up when the predetermined event occurs.

According to this structure, a data file including a plurality of music data corresponding to a plurality of musical compositions is distributed from a server device to a communication terminal device. In the communication terminal device, music data are extracted out of the data file in the communication terminal device to set up an annunciation sound. Therefore, without compelling the user to be engaged with a cumbersome work, it is possible to download music data of a plurality of musical compositions favored by the use as a job lot and set up, for example, an incoming call signaling melody in use of the music data.

According to a second illustrative, non-limiting aspect of the present invention, there is provided a data distribution system according to the preceding aspect, wherein the annunciation device in the communication terminal device sounds the annunciation sound based on the music data corresponding to the setup musical composition when the predetermined event occurred in response to a request from the other device.

According to a third illustrative, non-limiting aspect of the present invention, there is provided a data distribution system according to the preceding aspects, wherein
the record device in the communication terminal device includes: a first record region which stores the data file and being accessible from the setup device; a second record region which stores the music data corresponding to musical compositions set up as the annunciation sound; and an access device which can access the second record region, wherein
the setup device includes: an extraction device which extracts the music data, selected by the user, by reading the data file from the first record region; a control device which makes the music data extracted by the extraction device via the access device record into the second record region, wherein the annunciation device sounds the annunciation sound on the basis of the music data recorded in the second record region.

When these structures are adopted, since the access to the first record region and the second record region are limited, it is possible to prevent various data stored in the communication terminal device from being destroyed or altered. Therefore, it is possible to ensure security in the communication terminal device.

According to a fourth illustrative, non-limiting aspect of the present invention, there is provided a data distribution system according to the preceding aspects, wherein the server device further including:
an application storage device which stores an application corresponding to the data file in a one-by-one relationship, wherein
the distribution device in the server device distributes the application to the communication terminal device in response to the request message and the data file corresponding to the application, and the setup device in the communication terminal device sets up at least one of musical compositions corresponding to a plurality of music data included in the data file by executing the application thus distributed.

According to a fifth illustrative, non-limiting aspect of the present invention, there is provided a data distribution system according to the preceding aspects, wherein
the data file is formed to have at least one of image data and text data; related to a musical composition corresponding to music data, which are included in the data file which is described in correspondence with the music data, and
the communication terminal device further including:
a display control device which extracts at least one of the image data and the text data in response to instruction by a user on the basis of the selection data and makes thus selected data display on a display device.

According to these structures, it is possible for a user not only to replay music data but also to observe song data of the musical compositions and so on. Therefore, convenience for users can be improved.

According to a sixth illustrative, non-limiting aspect of the present invention, there is provided a data distribution system according to the preceding aspects, wherein
the communication terminal device further includes: an audition device which extracts music data corresponding to the musical composition selected by the user on the basis of the selection data and outputs a sound corresponding to the musical composition on the basis of the music data thus extracted to enable audition of the musical composition which is to be set as the annunciation sound.

According to the structure, musical compositions corresponding to music data are sounded upon user's request. Therefore, it is possible to make a user listen various musical compositions in conformity with the user's favor thereby improving convenience when the user selects an incoming call signaling melody.

According to a seventh illustrative, non-limiting aspect of the present invention, there is provided a data distribution system according to the preceding aspects, wherein
the data file includes both of first music data corresponding only to phrase portions being the most major portions respectively of the musical compositions and second music data corresponding to all phrases,
the annunciation device outputs the annunciation sound on the basis of the first music data, and
the audition device outputs a sound corresponding to the musical composition on the basis of the second music data.

According to the structure, when an annunciation sound is set up, only phrases being the most significant portion of each musical composition are sounded. When musical compositions are listened, all phrases of each musical composition are sounded thereby enabling to sound musical compositions which match user's favor.

According to an eighth illustrative, non-limiting aspect of the present invention, there is provided a server device which distributes music data corresponding to a musical composition which is to be set up in a communication terminal device as an annunciation sound for annunciating an occurrence of a predetermined event to the communication terminal device including:
a storage device which stores a data file including a plurality of music data and selection data for selecting each of the music data in the communication terminal device; and a distribution device which distributes the data file in response to the request message sent from the communication terminal device.

According to the structure, a data file including a plurality of music data corresponding to a plurality of musical compositions are distributed from a server device to a communication terminal device. In the communication terminal device, the music data are extracted out of the data file to set up an annunciation sound. Therefore, it is possible to download music data of a plurality of musical compositions as user' s favorite incoming call signaling melodies as a job lot and set up, for example, an incoming call signaling melody in use of the music data without compelling the user to be engaged with a cumbersome work.

According to a ninth illustrative, non-limiting aspect of the present invention, there is provided a communication terminal device that outputs an annunciation sound for annunciating an occurrence of a predetermined event in communication through a communication network including:
a communication device which sends a request message to a server device which has a database having a data file including a plurality of the music data and a selection data for selecting each of the music data and receives the data file which is returned in response to the message;
a record device which records the data file;
a setup device which extracts music data selected by the user on the basis of the selection data and sets up a musical composition corresponding to the music data as an annunciation sound; and
an annunciation device which outputs the annunciation sound on the basis of the music data corresponding to the musical composition thus set when the predetermined event occurs.

According to the structure, a data file including a plurality of music data corresponding to a plurality of musical compositions are distributed from a server device to a communication terminal device. In the communication terminal device, music data are extracted out of the data file to set up an annunciation sound. Therefore, it is possible to download music data of a plurality of musical compositions as user's favorite incoming call signaling melody as a job lot and set up, for example, an incoming call signaling melody in use of the music data without compelling the user to be engaged with a cumbersome work.

According to a tenth illustrative, non-limiting aspect of the present invention, there is provided an information recording medium having a data file including:
a plurality of music data corresponding to musical compositions which are set up as an annunciation sound for annunciating an occurrence of a predetermined event to a user in a communication terminal device; and
selection data for selecting each of the music data in the communication terminal device.

### BRIEF DESCRIPTION OF THE DRAWINGS

In the accompanying drawings:
Figure 1 is a block chart for showing a structure of a data distribution system S according to an illustrative, non-limiting embodiment of the present invention.
Figure 2 shows a data structure of a package file PF1 according to an illustrative, non-limiting embodiment of the present invention.
Figure 3 is a block chart for showing a structure of a portable phone MP-k according to an illustrative, non-limiting embodiment of the present invention.
Figure 4 is a block chart for showing a relationship of record regions in a record unit 27 of a portable phone MP-k according to an illustrative, non-limiting embodiment of the present invention.
Figure 5 shows transitional states of screen displayed on a display unit 23 of a portable phone MP-k when a package file PF1 and a set up application are downloaded according to an illustrative, non-limiting embodiment of the present invention.
Figure 6 is a flowchart for showing processes that a control unit 26 of a portable phone MP-k carries out in response to a setup application according to an illustrative, non-limiting embodiment of the present invention.
Figure 7 shows an index screen that is displayed on a display unit 23 of portable phone MP-k and a transitional state of the index screen on the later stages according to an illustrative, non-limiting embodiment of the present invention.

### DESCRIPTION OF THE PREFERRED EMBODIMENTS

### Embodiment 1

Preferred embodiments of the present invention will be described in conjunction with Figures.

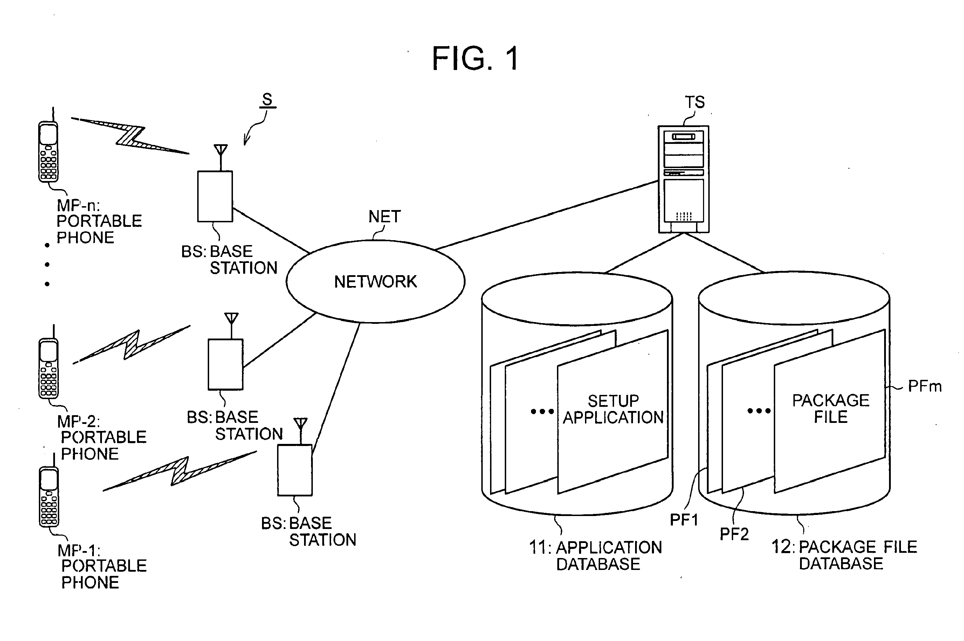

A structure of a data distribution system S according to Embodiment 1 will be described in reference of Figure 1.

As shown in Figure 1, the data distribution system S according to Embodiment 1 includes a plurality of portable phones MP-k (k=1,2,···,n), a music distribution server TS, and a network NET where an internet and a mobile packet communication network are mutually connected via a relay gate exchange station. The data distribution system S is provided to distribute music data corresponding to musical compositions (namely incoming call signaling melody), which are set up as an annunciation sound of for example a ring tone into the portable phones MP-k, from the music distribution server TS to the portable phones MP-k.

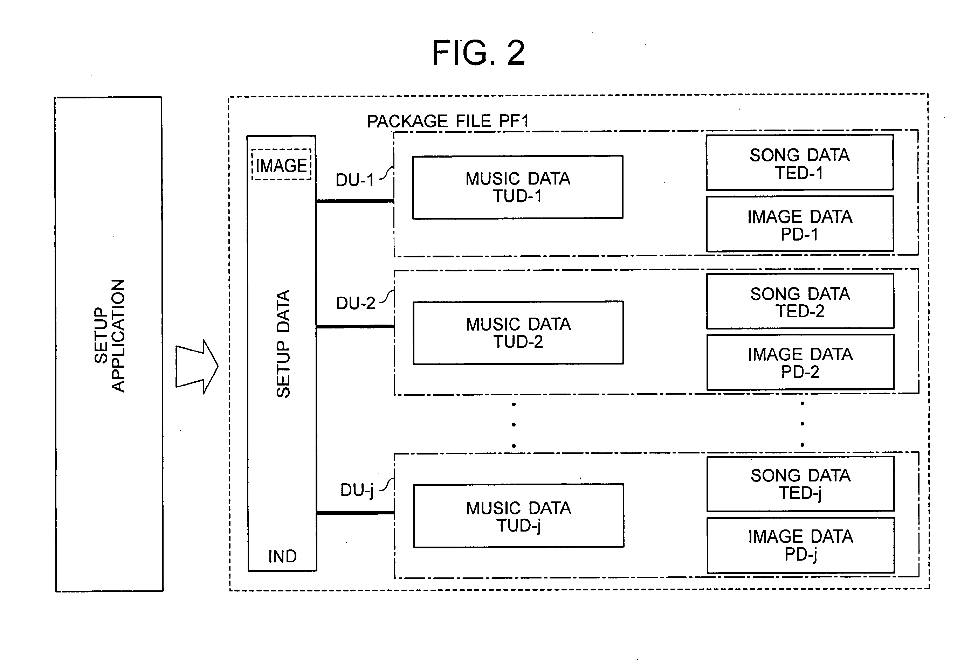

In this, a specific feature in Embodiment 1 is that the data distribution system S distributes music data from the music distribution server TS to the portable phones MP-k as a job lot while packaging music data corresponding to the plurality of musical compositions, included in for example an album, into one package. On the other hand, when if the structure of packaging and distributing the music data corresponding to the plurality of musical compositions all together is adopted, there is a problem of how to select a musical composition (vide Figure 2) to be set up as the incoming call signaling melody out of the music data.

In Embodiment 1, the following method is adopted. First, a plurality of application programs (hereinafter referred to as a setup application) are respectively provided in correspondence with each package file PF1 stored in the music distribution server TS. The setup application is exclusively used for downloading the corresponding package file PF1 and also works as an exclusive application for setting up an incoming call signaling melody based on the package file PF1. When the incoming call signaling melody is set up in the portable phone MP-k, the setup application is used to extract the music data TUD-i (Vide Figure 2) corresponding to the musical composition selected by the user in use of the setup application and set up as the incoming call signaling melody.

Hereinafter, various elements for realizing these functions are described in more detail.

First, the music distribution server TS is an Hypertext Transfer Protocol (HTTP) held by an Information Provider (IP) . When the music distribution server receives a GET request of HTTP from the network NET, the music distribution server TS returns, for example, HTML data corresponding to a download page of the package file PF1, the above-mentioned setup application, and the package file PF1, based on URL contained in the GET request. In order to achieve such the function, the music distribution server TS has an application database 11 (hereinafter database is referred to as DB), and a package file DB 12. In the package file DB 12, a plurality of package files PF1 respectively corresponding to each package file PF1 are stored. Setup applications respectively corresponding to each package file PF1 are stored in the application DB 11.

Although it is arbitrary to make hold the package files PF1 and the setup applications into the both of DB 11 and DB 12 in what form, each of the data is stored in a compressed state in view of reducing a memory area in the music distribution server according to Embodiment 1.

The data structure of the package file PF1 stored in the package file DB 12 will be described in detail in reference of Figure 2. As shown in Figure 2, the package file PF1 according to this embodiment includes the selection data IND and a data unit DU-i(I=1,2,···,j).

In these data, the data unit DU-i is unit data which are respectively provided for each musical composition and includes text data (hereinafter referred to as song data TED-i) representing a song of the musical composition, and image data PD-i representing an image related to the musical composition such as a photo of concert. The music data TUD-i included in the data unit DU-i are provided for soundingmusical compositions from the portable phone MP-k and used when an incoming call signaling melody is set in the portable phone MP-k. Although it is arbitrary whether or not data corresponding to all phrases of each of the musical compositions are used as the music data TUD-i, when setting up the incoming call signaling melody, it is considered attractive for users to sound only the most major phrase (i. e. deepest portion) in the musical component. Therefore, according to Embodiment 1, only the music data TUD-i corresponding to the deepest portion of the musical composition are used. Further, a data format of the music data TUD-I is arbitrary. The data format may be, for example, a music for imode (MLD), a musical instrument digital interface (MIDI),and an mpeg audio layer-3(MP3).

Meanwhile, selection data IND is data described in a form of hyper text markup language (HTML) and include texts representing a musical composition corresponding to the music data TUD in the package file PF1 and image data corresponding to a photo. Each of the musical composition names in the selection data IND has designating marks respectively corresponding to music data TUD-i, song data TED-i, and image data PD-i which are included in the data unit DU-i. By selecting the musical composition names (text data), the corresponding music data TUD-I or the like are extracted.

When the package file PF1 having such the structure is downloaded, for example, a list of musical compositions is displayed on the portable phone as an image (hereinafter referred to as an index image) corresponding to the selection data IND in accordance with the setup application. Then the music data TUD-i and so on are extracted in response to an input operation through the screen by a user thereby conducting the process based on the data.

Next, the portable phone MP-k tries to send and receive data to and from the data station BS accommodated in the network MP-k to conduct data communication through the network NET. In Embodiment 1, a user downloads the setup application and the package file PF1 from the music distribution server TS, and an incoming call signaling melody can be changed in use of the music data TUD-i included in the package file PF1 thus downloaded. The portable phone MP-k with the incoming call signaling melody set up annunciates occurrence of an event that a user receives a ring or the like by sounding the incoming call signaling melody when a ring arrives, an e-mail arrives, or there is a need to output the annunciation sound.

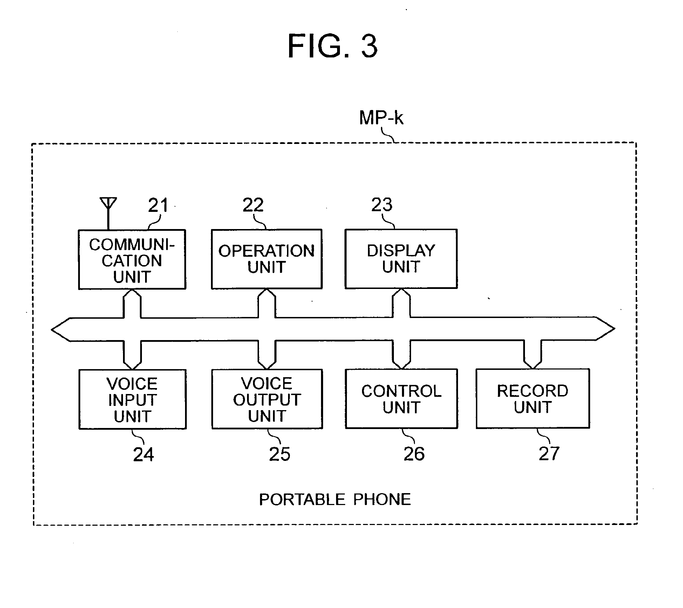

A concrete structure of the portable phone MP-k having such the functions will be described in reference of Figure 3. Figure 3 is a block chart showing the structure of the portable phone MP-k according to Embodiment 1.

First, in Figure 3, the communication unit 21 conducts a radio communication with the base station BS of the network NET under a control by the control unit 26. The operation unit 22 includes various buttons such as a push button (PB) and a cursor key. When a user conducts an input operation, an operation signal corresponding to the input operation is supplied to the control unit 26. The display unit 23 includes a display device such as a liquid crystal display and an electroluminescence (EL) panel. Various information pieces are displayed under a control of the control unit 26. The voice input unit 24 includes for example a microphone and a D/A converter. When various sounds like speech voice are inputted by a user are inputted into the voice input unit 24, voice data corresponding to the speech voice are generated and outputted to the communication unit 21. The voice output unit 25 has a speaker and outputs a voice corresponding to the voice data supplied from the communication unit 21 in use of the speaker. Further, the voice output unit 25 sounds the musical compositions corresponding to the music data TUD-i when it is supplied from the control unit 26. The control unit 26 has for example CPU, ROM, RAM, and so on to control various portions of the portable phone MP-k. In the ROM, various application programs such as a control program, an operating system(OS), and a world wide web (WWW) browser are recorded. Further, a program produced in various forms (for example, Java(Registered Trade Mark))and to be executed under a circumstance which is provided by an OS is recorded into the ROM. Such the program is in compliance with for example a J2ME connected Limited Device Configuration (CLCD) . The CPU controls various portions of the portable phone MP-k by conducting various programs which are stored in the ROM. The RAM is used as a work area.

Next, the record unit 27 shown in Figure 3 is constituted by a non-volatile memory such as an Electrically Erasable Programmable ROM (EEPROM) to store various data under a control by the control unit 26. The record unit 27 is divided into a plurality of record areas and memorizes different data into each of the areas.

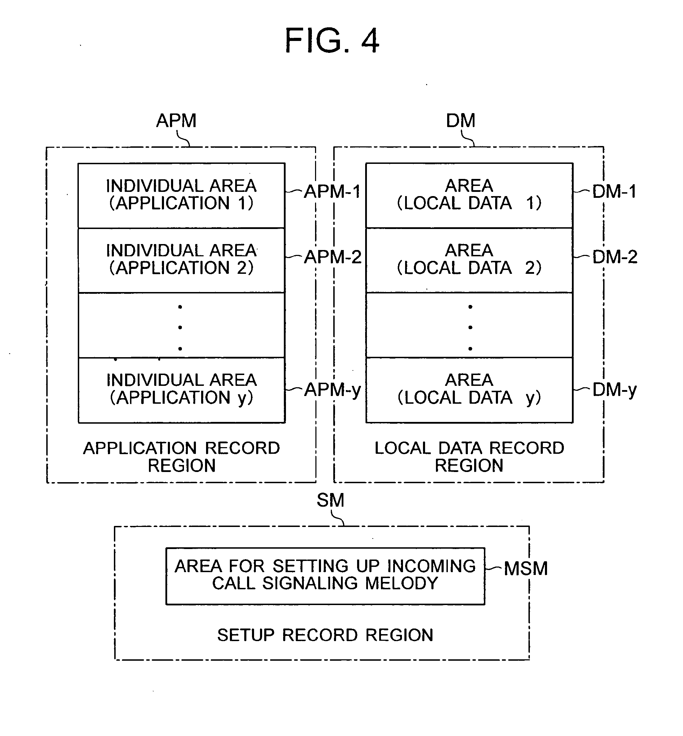

A configuration of the record unit 27 will be described in reference of Figure 4. Figure 4 is a block chart for showing a relationship of the recording areas and recording regions of the recording unit 27. As shown in the figure, the recording unit 27 are roughly made up of an application record region APM and an local data record region SM.

The application record region APM is made up of a plurality of individual areas APM-f(where f =1, 2, ...,y) respectively having a predetermined memory capacity of for example 30 kbyte. An application downloaded from a server on the network NET such as a music distribution server TS is recorded respectively into the individual areas APM-f.

Next, the local data record region DM is a region where data (hereinafter referred to as local data) necessary for executing an application recorded into the application record region APM. The local data record region DM is made up of a plurality of areas DM-f(where f =1, 2, ··· , y) which are respectively allocated to different applications. Further, the areas DM-f are isolated from applications, control programs and OS other than the application to be allocated in view of security. Therefore, only the local data inherent to the application to be allocated are stored. For example, the package file PF1 is downloaded in use of the setup application and stored into the area DM-f allocated to the setup application so that a program other than the setup application cannot access the package file PF1.

Meanwhile, the setup record region SM is provided for recording various setup information pieces showing setup conditions of the portable phone MP-k. In the setup record region SM, setup information for showing a setup state of for example a screen displayed when a ring is awaited(i.e. an idle screen)is recorded. The setup record region SM is accessible from only the OS to prevent data frombeing destroyed or altered by an application recorded in the application record region APM. Further, the setup record region SM is provided with an area MSM for setting up incoming call signaling melody which is to record music data TUD-i corresponding to a musical composition which is sounded when an event such as a ring and an alarming time reach (i.e. an incoming call signaling melody) . For example, the music data TUD-i prepared for the incoming call signaling melody and extracted from the package file PF1 in use of the setup application in Embodiment 1 are stored in the area MSM for setting up incoming call signaling melody.

### [1.2] Operation of Embodiment 1

Next, a specific operation of the data distribution system S according to Embodiment 1 having the above structure will be described. First, for example, when a user inputs a URL corresponding to a download page of the music distribution server TS into the operation unit 22 of the portable phone MP-k to execute a WWW browser. Then the control unit 26 reads out the WWW browser out of a ROM (not shown) in accordance with an operation signal supplied form the operation unit 22 and sends a GET request including the URL to the network NET. In this, the download page is a WEB page opened to download the package file PF1 corresponding to the desired musical composition in the music server TS.

Thus when the GET request which is sent from the portable phone to the network NET is received by the music distribution server TS, the music distribution server TS returns HTML data corresponding to the download page to the network NET in accordance with the URL included in the GET request.

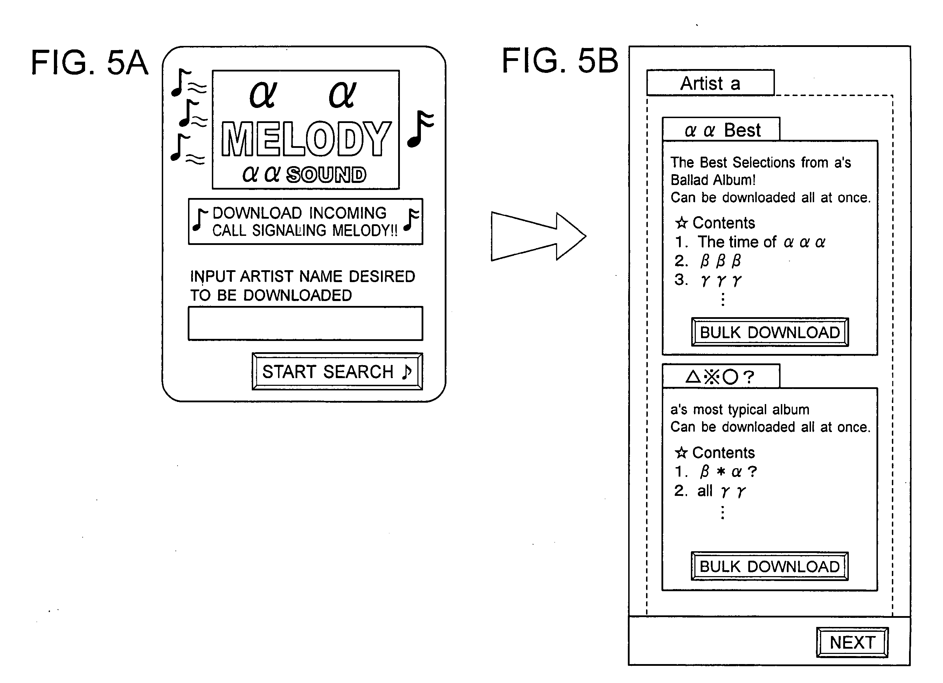

Next when the HTML data are received by a communication unit 21 of the portable phone MP-k, the control unit 26 of the portable phone MP-k stores the received HTML data into a RAM (not shown) and makes an image corresponding to the HTML data display on a display unit 23. An example of the image displayed on the display unit 23 of the portable phone MP-k is shown in Figure 5a. Figure 5 shows a transitional states of the screen after receiving the HTML data corresponding to the download page. In Figure 5, the images change from Figure 5a to Figure 5b.

As shown in Figure 5, there are a title image, a letter string of such as "INPUT ARTIST NAME DESIRED TO BE DOWNLOADED", an input box for inputting the artist name thereinto, and a button of "START SEARCH" are displayed on the display unit 23 of the portable phone MP-k. In this situation, a user inputs the artist name into the operation unit 22 of the portable phone MP-k and further inputs to select the button of "START SEARCH". Then the control unit 26 adds the artist name inputted by the user to the GET request, in which the URL of the music distribution server TS is designated, and sends it to the network NET.

As such, when the GET request which is sent from the portable phone MP-k is received by the music distribution server TS, the music distribution server TS starts to search based on the artist name included in the GET request and generates HTML data corresponding to the search result to thereby send these to the network NET. A method of searching can be arbitrary selected. For example, it is possible to separately provide a DB for searching the package file PF1.

Next, when the HTML data are received by the communication unit 21, the portable phone MP-k switches an image displayed on the display unit 23 from that shown in Figure 5a to that shown in Figure 5b by conducting a display process based on the HTML data. As a result, on the display unit 23 of the portable phone MP-k, the artist name included in the albums, his or her album names, introductory essays thereof, and musical composition names thereof are displayed in a mutually corresponding manner. Further, buttons for downloading a package file or the like corresponding respectively to the albums are displayed also on the display unit 23. The URLs designating places of storing the setup applications corresponding to the albums correspond to the albums. When the user selects the download button, the control unit 26 sends the GET request including the URL corresponding to the download button to the network NET.

On the other hand, when the GET request thus sent is received by the music distribution server TS, the music distribution server TS specifies the setup application to be distributed to the portable phone MP-k based on the URL added to the URL and sends the setup application to the network NET.

Next, when the setup application is received by the communication unit 21 of the music distribution server TS, the control unit 26 starts to download the package file PF1 by conducting the setup application after recording the setup application into individual areas APM-f of the application record region APM in accordance with the browser. In this process, the control unit 26 first sends the GET request including the URL of the package file PF1 to the network NET on the basis of the setup application under execution and waits the completion of the download of the package file PF1.

Meantime, when the GET request is sent, the music distribution server TS reads out the package file stored in the package file DB 12 on the basis of the URL included in the GET request and sends it to the portable phone MP-k.

As such, when all data of the package file PF1 distributed from the music distribution server TS are received by the communication unit 21, the control unit 26 specifies the area DM-f(local data record region DM) allocated to the setup application under execution, stores the package file PF1 into the area DM-f, and finishes its process.

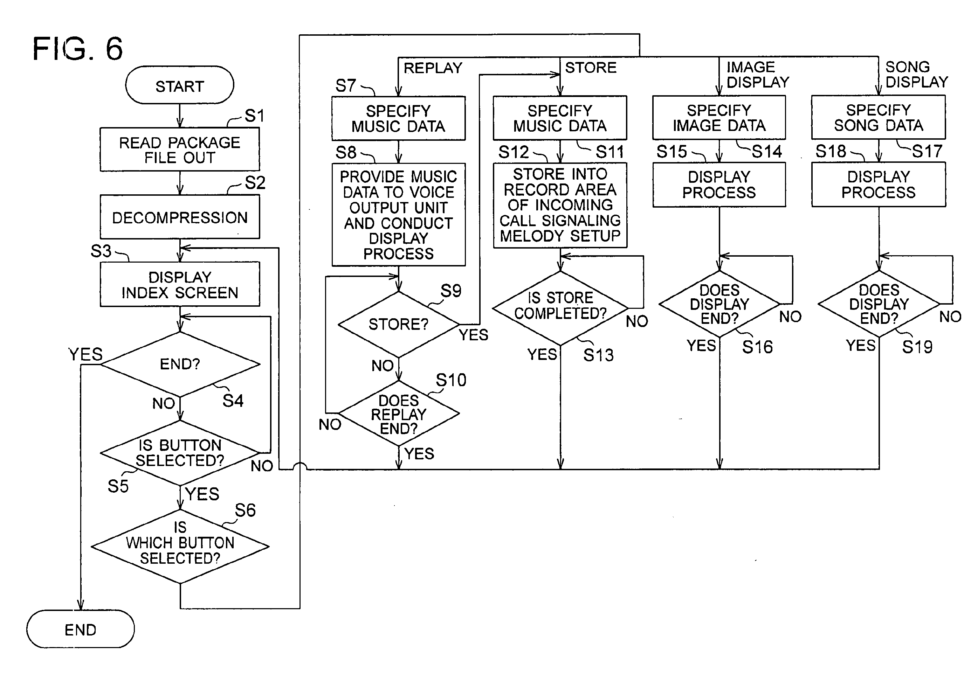

When the setup application and the package file PF1 are recorded into the record unit 27 after the series of the sequential process, it becomes possible to set up an incoming call signaling melody in use of the package file by the portable phone MP-k. In the state, when a user conducts an input operion of executing the setup application with respect to the operation unit 22 of the portable phone MP-k, the control unit 26 reads out the setup application from the application record region APM and starts the process shown in Figure 6.

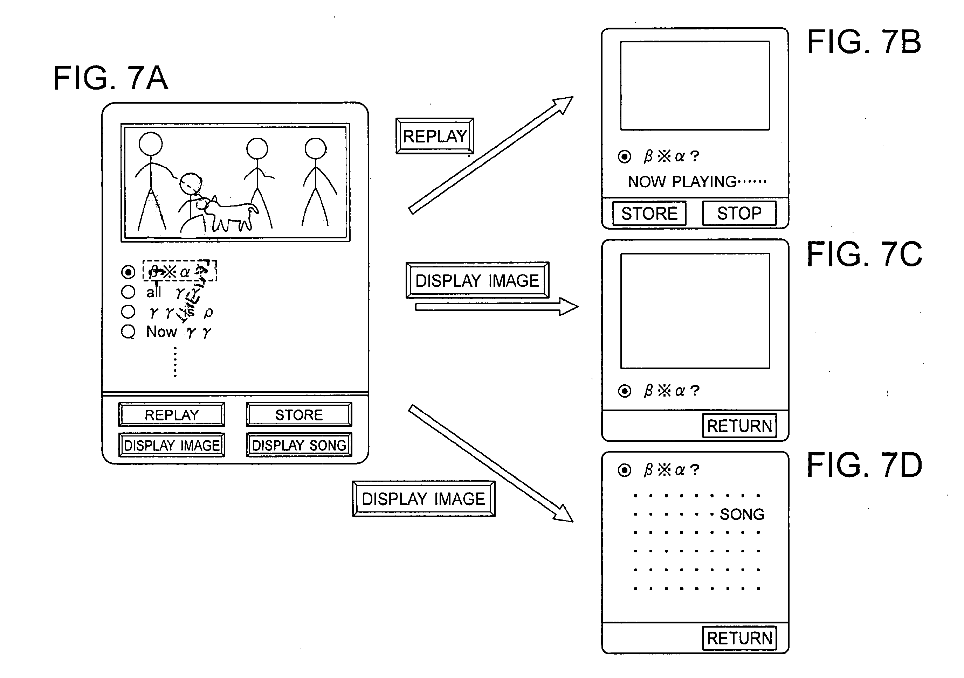

In this process, the control unit 26 first specifies the region DM-f and reads out the package file PF1 in Step S1. Then the package file PF1 is decompressed in Step S2. Selection data IND are extracted out of the package file PF1 thus decompressed and an index screen is displayed on the display unit 23 on the basis of the selection data IND in Step S3. At this time, an example of the screen of the index screen is shown in Figure 7a. As shown in Figure 7a, a list of musical compositions and check boxes for selecting the musical compositions are displayed on the display unit 23 of the portable phone MP-k, and four buttons of "REPLAY", "STORE", "DISPLAY SONG", and "DISPLAY IMAGE" are displayed. Here, the "REPLAY" button is provided for replaying the music data TUD-i selected in the check box to sound the musical composition from the voice output unit 25. The "STORE" button is provided for setting the data TUD-i corresponding to the selected musical composition as an incoming call signaling melody. The "DISPLAY SONG" button is provided for displaying a screen where the song of the selected musical composition is displayed. The "DISPLAY IMAGE" button is provided for displaying a screen corresponding to the image data PD-i related to the musical composition thus selected.

Next, the control unit 26 is in a state whether or not the process is ended in Step S4. In this judgment, if it is judged "YES", the process is finished. On the contrary, if it is judged "NO", it is in a state of judging whether or not the user pushes any button in Step S5. In Step S5, if it is judged "NO", the process returns to Step S4 to thereby repeat Steps 4 and 5. It is arbitrary judged how the end of the process is judged. For example, it may possible to judge the end when an end button displayed on an index screen is selected.

On the other hand, when the user conducts an input operation of selecting the button such as "REPLAY", the control unit 26 judges "YES" in Step S5. Then it is in a state of judging is which button selected by the user. Depending on the result of the judgment, the control unit 26 conducts further processes.

### <Selection of "REPLAY" button>

When the "REPLAY" button is selected, the control unit 26 specifies the music data TUD-i corresponding to the musical composition selected in the check box on the basis of an indicator included in the selection data IND in Step S7. Thus selected music data TUD-i is extracted and supplied to the voice output unit 25, and the display process is conducted in Step S8. As a result, the image displayed on the display unit 23 is changed from Figure 7a to 7b. The music data TUD-i are processed so that the musical composition corresponding to music data TUD-i are sounded from the speaker of the voice output unit 25. Further, the "STORE" button in Figure 7b is provided for setting up an incoming call signaling melody as in the "STORE" button in Figure 7a. The "RETURN" button stops the voice output based on the music data TUD-i and returns to a state of displaying the index screen in Figure 7a. Next, the control unit 26 is in a state of judging whether or not an input operation of selecting the "STORE" button in Step S9. When it is judged "YES", the processes of Steps S11 to S13 are conducted. On the other hand, if it is judged "NO", it is judged whether or not the replay is finished in Step 510. At this time, the control unit 26 judges "YES" when the "RETURN" button is selected, or the voice output based on the music data TUD-I is finished. As the result of the judgment, when it is judged "NO", the control unit 26 returns to Step S9. If it is judged "Yes", the control unit 26 returns to Step S3 and makes the index screen display based on the selection data IND.

### <Selection of "STORE" button>

When the "STORE" button is selected, the control unit 26 specifies the music data TUD-i corresponding to the musical composition thus selected on the basis of the selection data IND in Step S11. The specified music data TUD-i are extracted and stored into the area for setting up incoming call signaling melody MSM in Step S12. At this time, the setup application makes the music data thus extracted record in the incoming call signaling melody MSM through OS. As the result, the music data TUD-i recorded into the area for setting up incoming call signaling melody MSM is changed and the incoming call signaling melody which is sounded when a ring to the portable phone MP-k occurs. Further, the control unit 26 is in a state of awaiting completion of storage of the music data TUD-i along "no" in Step S13. When the storage is completed, "yes" is judged in Step S13 and the process returns to Step S3.

### <Selection of "DISPLAY IMAGE" button>

When the "DISPLAY IMAGE" button is selected, the control unit 26 specifies image data PD-i corresponding to the selected musical composition based on the selection data IND in Step S14. Then the setup application records the music data thus extracted into the area for setting up incoming call signaling melody MSM via the OS. As the result, the image displayed on the display unit 23 is changed from as in Figure 7a to as in Figure 7c. Next, the control unit 26 is in a state of judging whether the display is ended or not in Step S16. Until the user selects the "RETURN" button, the same step is repeated, and the process returns to Step S3 when the "RETURN" button is selected.

### <Selection of "DISPLAY SONG" button>

When the "DISPLAY SONG" is selected, the control unit 26 specifies the song data TED-i corresponding to the selected song on the basis of the selection data IND in Step S17. A display process is executed based on the specified song data TED-I in Step S18. As a result, in the portable phone MP-k, the image displayed on the display unit 23 is changed from Figure 7a to Figure 7d. Next, the control unit 26 is in a state of judging whether or not the display is ended in Step S19. When the return button is selected, the process returns to Step S3.

After the above steps are completed, the process returns to Step S3. When the user conducts an input operation designating the end of the process under a state that the index screen is displayed, the control unit 26 judges "YES" in Step S4 and completes the process.

As such, the data distribution system S makes the music distribution server TS hold the package file PF1 including the musical composition data TUD-i and the selection data IND and distributes the package file PF1 to the portable phone MP-k. Simultaneously, the portable phone MP-k processes the package file PF1 on the basis of the setup application to set up the incoming call signaling melody using an arbitrary music data TUD-I included in the package file PF1.

Therefore, it is possible to set up an incoming call signaling melody while downloading user' s favorite music data TUD-i as many as a plurality of musical compositions as a job lot to avoid a cumbersome work by the user.

Further, in the embodiment, the local data record region which is divided into a plurality of areas DM-f and the setup record region SM are provided in the record unit 27 of the portable phone MP-k. An access from other than the corresponding applications to each of the areas DM-f is prohibited.
Simultaneously, a structure allowing an access only from the OS is adopted in the setup record region SM. Therefore, it is possible to prevent various data stored into the portable phone MP-k from being destroyed and altered and ensure safety in the portable phone MP-k.

Further, the package file PF1 according to the embodiment includes song data TED-i and image data PD-i. Upon a user's input, an image corresponding to the song data TED-i or the image data PD-i is to be displayed on the display unit 23. Therefore, it is possible for the user not only to replay the music data TUD-i but also observe songs of the various musical compositions. Therefore, the convenience for the user is improved.

Furthermore, in this embodiment, the portable phone MP-k has a structure of replaying the various music data TUD-i when the incoming call signaling melody is set up. Therefore, it becomes possible to improve the convenience for a user to select the incoming all signaling melody

In this embodiment, the structure of including the song data TED-i and the image data PD-i is adopted. However, it is sufficient that only the selection data IND and the music data TUD-i are included, and the song data TED-i and the image data PD-i are not always necessary. In this case, it is sufficient to describe designating marks for designating various music data TUD-i.

Further, it is possible to arbitrarily provide the image data PD-i. It is unnecessary to provide exactly as described in Embodiment 1. It is possible to provide the image data PD-i irrespective of each of the musical compositions. In this case, a check box is provided to select each of the images on the index screen and the image selected in the check box is displayed.

Furthermore, in Embodiment 1, an explanation has been given to a case where the incoming call signaling melody is set up into the portable phone MP-k in the embodiment. However, the Embodiment is applicable to any apparatus as long as the apparatus can sound an incoming call signaling melody. For example, with respect to a land phone and a facsimile (facsimile transmission machine) both for home, the incoming call signaling melody may be arbitrarily set up by a user by adopting a structure similar to the portable phone MP-k in Embodiment 1.

Further, in Embodiment 1, the structure of transiting the display screen from the index screen (e.g. Figure 7a) to another screen (e.g. Figure 7b) is adopted when the music data TUD-i are replayed. However, the display screen at a time of replaying the music data TUD-i is arbitrary. For example, it may be possible to display a replay screen as in Figure 7b on the index screen by superposing the replay screen on the index screen, or it also possible to replay the music data TUD-i on the index screen.

Furthermore, although in Embodiment 1 the structure of sounding a musical composition as the incoming call signaling melody when an event such as a ring occurs, what sounded is not limited to a musical composition and may be any as long as it is a sound. Further, it is possible to set up an idle screen of the portable phone MP-k using the image data PD-i included in the package file.
0062 Furthermore, although data communication is conducted solely by the portable phone MP-k through the network in Embodiment 1, it is also possible to conduct data communication by connecting a Subscriber Identify Module (SIM) which has subscriber's information recorded in it and using the subscribers' information recorded in the SIM through the network.

### [1.3] Modification

### (1) Modified Example 1

In the above Embodiment 1, the structure is such that the package file PF1 and the setup application are held in the music distribution server TS in a manner of giving a one-to-one relationship therebetween, and thus related package file PF1 is download as a job lot. This is because the area DM-f allocated to one application is preset in the portable phone MP-k and the data amount of the local data that can be downloaded using one setup application is limited.

However, when it is possible to increase the memory capacity of the area DM-i allocated to the applications, it is possible to download the plurality of the package files PF1 using one setup application. In this case, the setup application is previously downloaded using the portable phone MP-k, the setup application is used as a downloader, and HTML data corresponding to the download page of the music distribution server TS are obtained. Then, based on the HTML data, the download page is displayed on the portable phone MP-k to make a user select the package file PF1 on the page. Thus selected package file is downloaded using the setup application and recorded into the area DM-i corresponding to the setup application of the portable phone MP-k.

The data processing method and the data storage method in this case are the same as in the above embodiment except for a feature that a plurality of package files PF1 are recorded into the area DM-f corresponding to the one setup application. Therefore, the detailed explanation is omitted.

As described, according to this method, it is possible to download as a job lot the plurality of the music data TUD-i by downloading the package file PF1. Therefore, it is possible to reduce the download cost and effectively utilize the communication bandwidth of the network NET.

Further, aside from the above method, it is possible to make a plurality of music data TUD-i package and download in the portable phone MP-k by adopting the following method.

First, the setup applications are provided, for example, for each album to configure the setup application by two files of (file 1) an application file made of the application itself, and (file 2) a data file formed by data actually to be used when the application is conducted. Further, the selection data IND and the music data TUD-i, the song data TED-i, and the image data PD-i are described in the data file. When the setup application is downloaded, a user makes the setup application corresponding to the album, which is selected in the download page, download into the portable phone MP-k and record into an individual area APM-f of the portable phone MP-k. Then the selection data IND included in the data file are extracted to make the index screen display when the setup application is conducted. At the same time, in response to the input operation conducted by the user in accordance with the screen, data such as the music data TUD-i are extracted to conduct the process in accordance with the data. Since the processes other than described here are the same as the above embodiment, detailed explanation is omitted.

As such, in accordance with any of the above methods, it is possible to download the music data corresponding to the plurality of musical compositions as a job lot. Therefore, it becomes possible to assure convenience for the user.

### (2) Modified Example 2

In the above embodiment, only the music data TUD-i corresponding to the deep portion of each musical composition are equipped with the package file PF1 to set up an incoming call signaling melody using the music data TUD-i. However, when an actual application is considered, (a) it is fascinating for a user to replay only the deep portion when it is set up as the incoming call signaling melody. On the other hand, (b) there is a high possibility that all phrases of musical composition are required to be listened when the music data TUD-i are replayed.

Therefore, in this Modified Example 2, both of music data for an incoming call signaling melody and music data only for replay are provided for each musical composition. When the "REPLAY" button is selected on the index screen, the music data only for replay are replayed to output sounds corresponding to all phrases. Meanwhile, when the "STORE" button is selected, the music data for incoming call signaling melody are recorded into the area for setting up incoming call signaling melody MSM. In this case, designating marks for designating the music data only for replay correspond to the "REPLAY" buttons, and designating marks for designating the music data for incoming call signaling melody correspond to the "STORE" button in the selection data IND. The music data may be changed with a button selected by the user.

As such, according to the Modified Example 2, it is possible to sound a musical composition more suitable for the user's taste by changing the musical composition that sounds when the incoming call signaling melody is set up and the phrase number of the musical composition that sounds when it is replayed.

### (3) Modified Example 3

In the above Embodiment 1, when the "DISPLAY SONG" button is selected on the index screen, song data TED-i are extracted out of the package file PF1 to display the song on the basis of the data TED-i. Namely, in the above Embodiment 1, a method of displaying the song is adopted irrespective of the replay of the music data TUD-i. On the contrary, according to the Modified Example 3, a structure of linking a replay of the music data TUD-i to a song display based on the song data TED-i . More specifically, when the "REPLAY" button is selected on the index screen, the song data TED-i corresponding to the music data TUD-i are extracted in conformity with replay of the music data TUD-i to display the song corresponding to the music on the display unit 23.

When the songs are displayed, it is arbitrary which display method is selected. For example, it may possible to make a display screen display a song by scrolling screen images in accordance with replay of the music data TUD-i. Further, it is possible to change a display color of a song in accordance with the replay of the music data TUD-i. In this case, it becomes necessary to describe management data for managing a display time of each musical composition in the music data TED-i, and manage the replay Lime of the music data TUD-i on the basis of the music data TUD-i. Further, on the basis of the replay time of the music data TUD-i, it is specified which position of the music data TED-i should be displayed. Then the song corresponding to the specified position is displayed or a display color thereof may be changed.

The present invention is not confined to the configurations listed in the foregoing embodiments, but it is easily understood that the person skilled in the art can modify such configurations into various other modes, within the scope of the present invention described in the claims.

The entire disclosures of Japanese Patent Application No. 2005-876 filed in January 5, 2005 including the specification, claims, drawings and summary are incorporated herein by reference in its entirety.

## Claims

1. A data distribution system for distributing music data, which correspond to a musical composition set up as an annunciation sound for announcing an occurrence of a predetermined event to a user in a communication terminal device (MP-k), from a server device (TS) to the communication terminal device, **characterized in that**,
the server device (TS) is **characterized by** comprising:
a storage device which stores a data file including a plurality of the music data and selection data for enabling selection of each of the music data on the communication terminal device; and
a distribution device which distributes the data file in response to a request message sent from the communication terminal device, and
the communication terminal device **characterized by** comprising:
a communication device (21) which sends the request message and receives the data file thus distributed; and
a record device (27) which records the data file;
a setup device (26) which extracts the music data selected by the user based on the selection data out of the data file and set up the musical composition corresponding to the music data as the annunciation sound; and
an annunciation device (25) which outputs the annunciation sound based on the music data corresponding to the musical composition thus set up when the predetermined event occurs.

2. A data distribution system according to Claim 1,
**characterized in that**
the annunciation device (25) in the communication terminal device (MP-k) outputs the annunciation sound based on the music data corresponding to the setup musical composition when the predetermined event occurred in response to a request from the other device.

3. A data distribution system according to Claim 1,
**characterized in that**
the record device (27) in the communication terminal device (MP-k) comprising:
a first record region (DM) which stores the data file and is accessible from the setup device;
a second record region (APM) which stores the music data corresponding to musical compositions set up as the annunciation sound; and
an access device (26) which can access the second record region (APM), and
the setup device comprising:
an extraction device (26) which extracts the music data, selected by the user, by reading the data file from the first record region;
a control device (26) which makes the music data extracted by the extraction device via the access device record into the second record region, and
the annunciation device (25) outputs the annunciation sound on the basis of the music data recorded in the second record region.

4. A data distribution system according to Claim 1,
**characterized in that**
the server device (TS) further comprising:
an application storage device (11) which stores an application corresponding to the data file in a one-by-one relationship, wherein
the distribution device (TS) in the server device distributes the application to the communication terminal device (MP-k) in response to the request message and the data file (PFm) corresponding to the application, and
the setup device (26) in the communication terminal device (MP-k) sets up at least one of musical compositions corresponding to a plurality of music data included in the datafile (PFm) by executing the application thus distributed.

5. A data distribution system according to any one of Claims 1 to 4, **characterized in that**
the data file is formed to have at least one of image data and text data, related to a musical composition corresponding to music data, which are included in the data file (PFm) which is described in correspondence with the music data, and
the communication terminal device (MP-k) further comprising:
a display control device (26) which extracts at least one of the image data and the text data in response to instruction by a user on the basis of the selection data and makes thus selected data display on a display device.

6. A data distribution system according to any one of Claims 1 to 5, **characterized in that**
the communication terminal device (MP-k) further comprising:
an audition device (26) which extracts music data corresponding to the musical composition selected by the user on the basis of the selection data and outputs a sound corresponding to the musical composition on the basis of the music data thus extracted to enable audition of the musical composition which is to be set as the annunciation sound.

7. A data distribution system according to Claim 6,
**characterized in that**
the data file (PFm) includes both of first music data corresponding only to phrase portions being the most major portions respectively of the musical compositions and second music data corresponding to all phrases,
the annunciation device (25) outputs the annunciation sound on the basis of the first music data, and
the audition device (25) outputs a sound corresponding to the musical composition on the basis of the second music data.

8. A server device which distributes music data corresponding to a musical composition which is to be set up in a communication terminal device (MP-k) as an annunciation sound for annunciating an occurrence of a predetermined event to the communication terminal device (MP-k) **characterized by** comprising:
a storage device which stores a data file including a plurality of music data and selection data for selecting each of the music data in the communication terminal device; and
a distribution device which distributes the data file in response to the request message sent from the communication terminal device.

9. A communication terminal device (MP-k) that outputs an annunciation sound for annunciating an occurrence of a predetermined event in communication through a communication network **characterized by** comprising:
a communication device (21) which sends a request message to a server device (TS) which has a database having a data file (PF) including a plurality of the music data and a selection data for selecting each of the music data and receives the data file which is returned in response to the message;
a record device (27) which records the data file;
a setup device (26) which extracts music data selected by the user on the basis of the selection data and sets up a musical composition corresponding to the music data as an annunciation sound; and
an annunciation device (25) which outputs the annunciation sound on the basis of the music data corresponding to the musical composition thus set when the predetermined event occurs.

10. An information recording medium having a data file **characterized by** recording:
a plurality of music data corresponding to musical compositions which are set up as an annunciation sound for annunciating an occurrence of a predetermined event to a user in a communication terminal device; and
selection data for selecting each of the music data in the communication terminal device.
